# EUROPÄISCHE PATENTSCHRIFT

(11) **EP 0 914 569 B1**
(45) Veröffentlichungstag und Bekanntmachung des Hinweises auf die Patenterteilung: **12.02.2003**
(21) Anmeldenummer: 98919016.0
(22) Anmeldetag: 15.05.1998
(51) Int. Cl.: F16F 9/32, F16F 9/56

(54) **EINRICHTUNG ZUR VERSTELLUNG DER LÄNGE EINER STÜTZE**
DEVICE FOR ADJUSTING THE LENGTH OF A SUPPORT
DISPOSITIF POUR LE REGLAGE DE LA LONGUEUR D'UN SUPPORT

(30) Priorität: 21.05.1997 CH 118397
(43) Veröffentlichungstag der Anmeldung: 12.05.1999
(73) Patentinhaber: Cabex AG, 9490 Vaduz (LI)
(72) Erfinder: Kulhavy Sava V., 9000 St. Gallen (CH)
(74) Vertreter: Kulhavy, Sava V.
(86) Internationale Anmeldenummer: CH9800201
(87) Internationale Veröffentlichungsnummer: WO98053220

(56) Entgegenhaltungen:
- EP-A- 0 447 674
- DE-A- 2 942 455

## Beschreibung

Die vorliegende Erfindung betrifft eine Einrichtung zur Verstellung der Länge einer Stütze, welche insbesondere an Stühlen, Tischen oder dgl. verwendbar ist, mit einem im wesentlichen rohrförmigen Aussenteil und einem sich in diesem befindlichen Innenteil, welcher einen im wesentlichen rohrförmigen Grundkörper aufweist, und mit einem Kolben, welcher im Innenteil verschiebbar ist, wobei den Endpartien des Grundkörpers Endstücke zugeordnet sind, die die Einrichtung nach außen hin abgrenzen.

Eine Verstelleinrichtung dieser Gattung, welche auch als Fluidfeder bezeichnet werden kann, ist bereits bekannt. Sie benötigt eine Ventilanordnung, welche zwischen jenen Fluidräumen geschaltet ist, von welchen je einer sich zu je einer Seite des Kolbens befindet. Diese Ventilanordnung steuert den Fluidfluss zwischen dem Raum vor und hinter dem Arbeitskolben und damit auch die Ausschubbewegung der Stange des Arbeitskolbens. Der Kolben selbst ist im Inneren der Fluidfeder hermetisch dicht geführt.

Die Konstruktion dieser vorbekannten Einrichtung ist derart, dass sie mindestens zehn Bauteile benötigt, dass diese Bauteile sehr präzise ausgeführt sein müssen und der Zusammenbau der genannten Teile zur genannten Einrichtung ebenfalls einen grossen Aufwand benötigt.

Die Aufgabe der vorliegenden Erfindung ist, diese sowie noch weitere Nachteile zu beseitigen.

Diese Aufgabe wird bei der Einrichtung der eingangs genannten Gattung erfindungsgemäss so gelöst, wie dies im kennzeichnenden Teil des Patentanspruchs 1 definiert ist.

Nachstehend werden Ausführungsformen der vorliegenden Erfindung anhand der beiliegenden Zeichnungen näher erläutert. Es zeigt:
Fig. 1 in einem vertikalen Längsschnitt eine erste Ausführungsform der vorliegenden Einrichtung, welche einen rohrförmigen Aussenteil und einen sich in diesem befindlichen Innenteil aufweist,
Fig. 2 in einer Draufsicht den Innenteil aus Fig. 1,
Fig. 3 in einem Längsschnitt den Innenteil aus Fig. 2,
Fig. 4 einen Schnitt A-A durch den Innenteil aus Fig. 3,
Fig. 5 einen Schnitt B-B durch den Innenteil aus Fig. 3,
Fig. 6 eine Drossel am Innenteil gemäss Fig. 2,
Fig. 7 in einem vertikalen Längsschnitt eine zweite Ausführungsform der vorliegenden Einrichtung,
Fig. 8 vergrössert eine der Endpartien der Einrichtung gemäss Fig. 7,
Fig. 9 eine Weiterentwicklung der Einrichtung aus Fig. 7 und
Fig. 10 bis 12 weitere Ausführung der in Fig. 8 gezeigten Endpartie.

Die vorliegende Einrichtung ist als eine Fluidfeder ausgeführt. Es kann sich beispielsweise um eine Gasfeder oder um eine hydraulische Feder handeln, wobei solche Federn allgemein bekannt sind. Die Länge einer solchen Verstelleinrichtung ist in einer bekannten Weise veränderbar und arretierbar.

Die vorliegende Verstelleinrichtung weist ein Gehäuse 1 auf, welches nachstehend auch als Aussenteil dieser Einrichtung bezeichnet wird. Der Grundkörper 2 dieses Aussenteiles 1 ist im wesentlichen zylinderförmig bzw. rohrförmig. Auf dem oberen Abschnitt des Gehäuses 1 kann die Sitzfläche eines Stuhles, die Platte eines Tisches oder dgl. aufgesetzt sein. Zur Betätigung der Verstelleinrichtung ragt ein an sich bekannter Stössel 3 axial aus der oberen Stirnfläche des Grundkörpers 2 dieser Verstelleinrichtung heraus. Im Inneren des Gehäuses 1 befindet sich ein Kolben 4, welcher an einem Ende einer Stange 5 befestigt ist. Diese Kolbenstange 5 ragt aus der unteren bzw. gegenüberliegenden Endpartie des Federgehäuses 1 heraus.

Die aus dem Gehäuse 1 ragende Endpartie der Kolbenstange 5 ist der Bodenplatte eines Führungsrohres (nicht dargestellt) zugeordnet, welches mit dem Fuss eines Stuhles, eines Tisches oder dgl. verbunden ist. Hierzu ist diese Endpartie der Kolbenstange 5 mit einem axial abstehenden Zapfen 6 versehen, dessen Durchmesser kleiner ist als der Durchmesser der Kolbenstange 5. In der freien Endpartie des Zapfens 6 ist eine umlaufende Rille 7 ausgeführt, welche zur Aufnahme eines Sicherungselementes vorgesehen ist. Dieses Element stellt sicher, dass die untere Endpartie der Kolbenstange 5 mit dem Fuss des Möbelstückes oder dgl. in Eingriff bleibt.

Die vorliegende Einrichtung umfasst ferner einen Innenteil 10, welcher einen im wesentlichen zylinder- bzw. rohrförmigen Grundkörper 11 aufweist und welcher im Aussenteil 1 angeordnet bzw. eingesetzt ist. Der Kolben 4 ist im Innenteil 10 verschiebbar und fluiddicht gelagert. Zu diesem Zweck ist die Umfangspartie des Kolbens 4 mit einem Dichtring 7 versehen. Der Kolben 4 teilt den Hohlraum im Innenteil 10 in zwei Teilräume 8 und 9, wobei zu je einer Seite des Kolbens 4 sich einer dieser Teilräume 8 bzw. 9 befindet. Den Endpartien des Grundkörpers 11 dieses Innenteiles 10 sind Endstücke 12 und 13 zugeordnet. Eines dieser Endstücke 12 bzw. 13 ist mit dem rohrförmigen Grundkörper 11 des Innenteiles 10 einstückig.

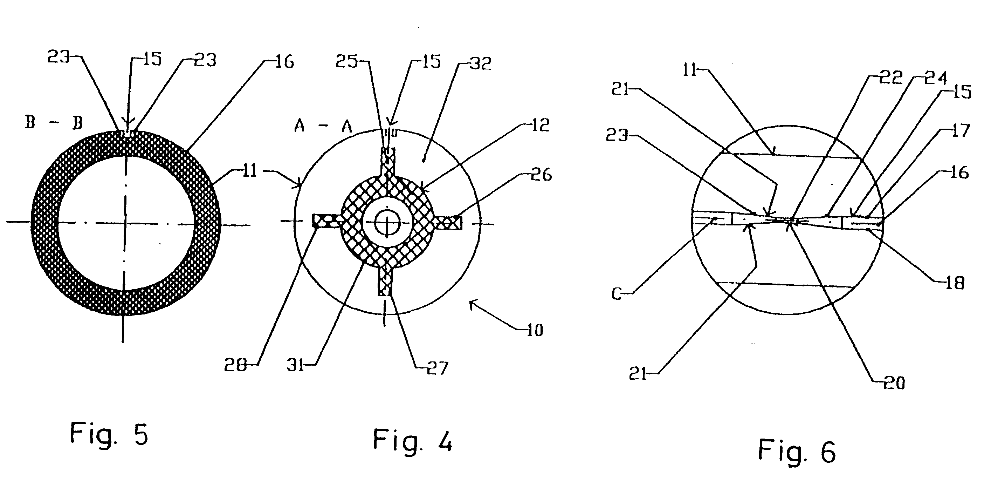

Die Aussenseite des rohrförmigen Grundkörpers 11 des Innenteiles 10 liegt an der Innenseite des Aussenteiles 1 an und ein Ueberströmkanal 15 ist zwischen dem Aussenteil 1 und dem Innenteil 10 ausgeführt. Je eine der Mündungen dieses Kanals 15 liegt im Bereich eines der bereits erwähnten Endstücke 12 bzw. 13 dieser Einrichtung. Im dargestellten Fall ist der Ueberströmkanal 15 in der Aussenseite des Grundkörpers 11 des Innenteiles 10 ausgeführt und er hat die Form einer Rinne bzw. Nut. Im dargestellten Fall ist der Querschnitt dieser Rinne 15 viereckförmig, sodass die Rinne 15 einen Boden 16 sowie Seitenwände 17 und 18 aufweist (Fig. 6). Die vierte Wand dieses Kanals 15 bildet der über bzw. gegenüber diesem Kanal 15 liegende Abschnitt der Innenseite des Aussenteiles 1.

Der Ueberströmkanal 15 ist mit einer Drossel bzw. Drosselvorrichtung 20 versehen. Diese Drossel 20 ist als eine Verjüngung des Querschnittes des Ueberströmkanals 15 ausgeführt. Im dargestellten Fall weist die jeweilige Seitenwand 17 bzw. 18 eine Einbuchtung 21 auf, welche in das Innere des Kanals 15 eindringt bzw. sich im Inneren des Kanals 15 befindet. Die Einbuchtung 21 umfasst einen Stirnabschnitt 22, welcher am weitesten von jener Seitenwand 17 bzw. 18 liegt, zu der er gehört. Im dargestellten Fall ist dieser Stirnabschnitt 22 plan und er erstreckt sich praktisch parallel zur Längsachse C des Innenteiles 10. Die Einbuchtung 21 umfasst ferner zwei Rampenabschnitte 23 und 24, von welchen je einer sich einerends an eines der Enden des Stirnabschnittes 22 anschliesst. Das andere Ende des jeweiligen Rampenabschnittes 23 bzw. 24 liegt in jener Seitenwand 17 bzw. 18, aus der die Einbuchtung 21 ragt.

Es versteht sich, dass der Ueberströmkanal 15 auch nur mit einer einzigen Einbuchtung 21 versehen sein kann, welche einer der Seitenwände 17 oder 18 des Kanals 15 zugeordnet ist.

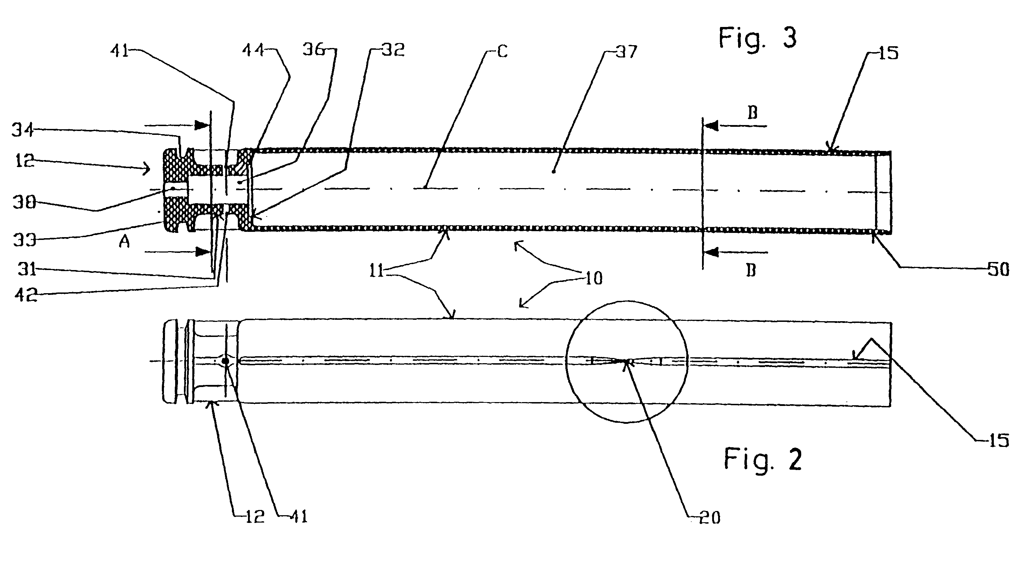

Das Endstück 12 ist mit einer Ventilanordnung 30 versehen, welche das Ueberströmen eines Fluids zwischen den Teilräumen 8 und 9 ermöglicht. Im anderen Endstück 13 ist die Kolbenstange 5 längsverschiebbar und fluiddicht gelagert. Fig. 2 bis 5 zeigen jene Ausführungsform der vorliegenden Einrichtung, bei welcher das mit dem Grundkörper 11 des Innenteiles 10 ein Ganzes bildende Endstück 12 die Ventilanordnung 30 aufweist. Diese Ventilanordnung 30 ist im Bereich des rohrförmigen Grundkörpers 31 dieses Endstückes 12 ausgeführt.

Dieses Endstück 12 weist einen rohrförmigen Grundkörper 31 auf, dessen Durchmesser kleiner ist als der Durchmesser des Grundkörpers 11 des Innenteiles 10. An eine der Endpartien dieses Grundkörpers 31 schliesst sich eine Platte 32 an, welche mit diesem Grundkörper 31 einstückig ist und welche die Form eines flachen Ringes hat. Der Aussenrand dieser Verbindungsplatte 32 ist mit einer der Endpartien des rohrförmigen Grundkörpers 11 des Innenteiles 10 verbunden. An das andere Ende des rohrförmigen Grundkörpers 31 des Endstückes 12 schliesst sich eine zweite Platte 33 an, welche praktisch parallel zur Verbindungsplatte 32 liegt und auf welcher ein eingebördelter Rand 29 des Aussenteiles 1 aufliegt. Diese Auflageplatte 33 ist im wesentlichen ebenfalls ringförmig und sie ist mit dem Grundkörper 31 dieses Endstückes 12 einstückig. In der Umfangsfläche der Auflageplatte 33 ist eine umlaufende Rille 34 ausgeführt, in welcher ein Dichtungsring 35 liegt.

Die im wesentlichen zylinderförmige Innenfläche des rohrförmigen Grundkörpers 31 des Endstückes 12 begrenzt einen Innenraum 36 in diesem Grundkörper 31, welcher sich im Bereich der Verbindungsplatte 32 in den Hohlraum 37 des Innenteiles 10 öffnet. Im Bereich der Auflageplatte 33 schliesst sich eine Bohrung 38 an den Innenraum 36 an, in der der Stössel 3 längsverschiebbar gelagert ist. Die Aussenfläche des rohrförmigen Grundkörpers 31 zusammen mit den entsprechenden Abschnitten der Platten 32 und 33 sowie zusammen mit der darüber liegenden Innenfläche des Aussenteiles 1 begrenzen einen Aussenraum 39. In diesem Aussenraum 39 befinden sich Verstärkungsrippen 25, 26, 27 und 28, welche vom Grundkörper 31 abstehen und welche sich zwischen den Platten 32 und 33 dieses Endstückes 12 erstrecken. Die Höhe dieser Verstärkungsrippen 25 bis 28 ist allerdings kleiner als der Halbmesser der genannten Platten 32 und 33.

Eines der Enden des Ueberströmkanals 15 mündet in den genannten Aussenraum 39 im Endstück 12. Durch den rohrförmigen Grundkörper 31 gehen Kanäle 41 und 42 hindurch, welche den Aussenraum 39 mit dem Innenraum 36 fluidmässig verbinden. Diese Verbindungskanäle 41 und 42 stehen praktisch rechtwinklig zur Längsachse C der vorliegenden Einrichtung und sie können nur die Wand des Grundkörpers 31 durchsetzen oder sie gehen durch eine der Verstärkungsrippen 25 usw. und den darunter liegenden Abschnitt der Wand des Grundkörpers 31 hindurch. Der Durchmesser dieser Kanäle 41 und 42 kann so gewählt werden, damit diese Kanäle 41 und 42 den Durchfluss des Fluids zwischen den genannten Teilräumen 8 und 9 des Innenteiles 10 drosseln können. Diese Kanäle 41 und 42 können somit als Drosselbohrungen dienen. Wenn der Durchmesser dieser Kanäle 41 und 42 in dieser Weise bemessen ist, dann kann die Drosselvorrichtung 20 wegfallen.

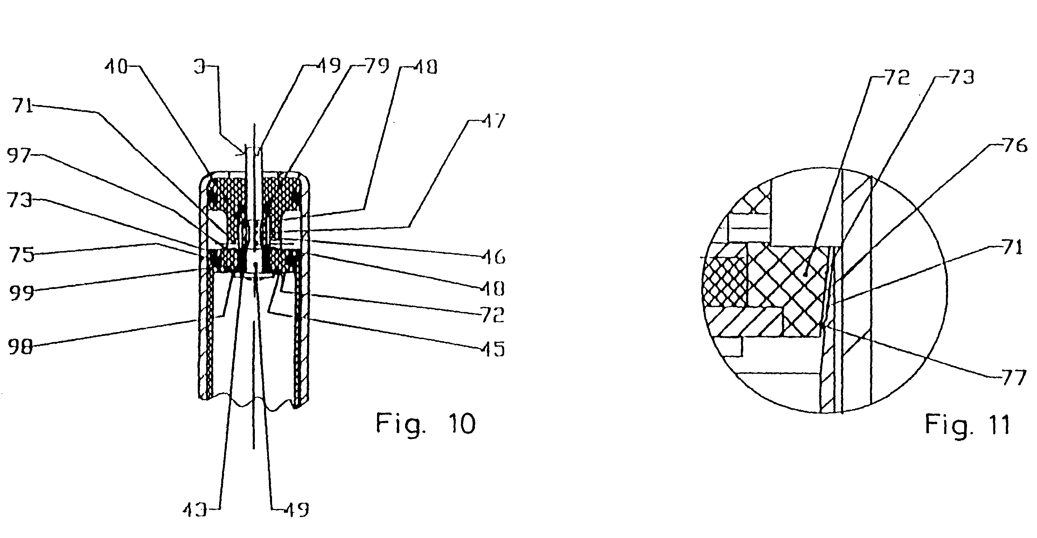

Der Innenraum 36 im Endstück 12, welches die Ventilanordnung 30 aufweist, ist im wesentlichen zylinderförmig, wobei die Längsachse dieses Zylinderraumes 36 mit der Hauptachse C des Endstückes 12 zusammenfällt. In jenem Bereich des Zylinderraumes 36, welcher sich an die Bohrung 38 in diesem Endstück 12 anschliesst, liegt eine Dichtung 79. Diese Dichtung 79 umgibt jenen Abschnitt des durch diesen Zylinderraum 36 hindurchgehenden Stössels 3, welcher sich in der Nähe der Auflageplatte 33 befindet (Fig. 10). Die Dichtung 79 kann als ein Ring ausgeführt sein. Die Innenseite dieses Ringes 79 liegt am Stössel 3 und die Aussenseite desselben an der Innenwand des Zylinderraumes 36 fluiddicht auf.

Die Ventilanordnung 30 umfasst unter anderem den bereits genannten Stössel 3 sowie einen Andrückkörper 43, welcher an jene Endpartie des Stössels 3 angeschlossen ist, welche sich im Bereich der Verbindungsplatte 32 des Endstückes 12 bzw. im Hohlraum 37 des Innenteiles 10 befindet. Dieser Andrück- bzw. Absperrkörper 43 liegt praktisch im Hohlraum 37 des Innenteiles 10 und er hat die Form einer kreisförmigen Scheibe, deren Durchmesser grösser ist als der Durchmesser des Innenraumes 36 im Endstück 12.

In dem dem Hohlraum 37 des Innenteiles 10 zugewandten Bereich der Verbindungsplatte 32 ist eine flache Vertiefung mit einer kreisförmigen Umfangswand ausgeführt, welche sich an den Innenraum 36 im Endstück 12 anschliesst. Der Durchmesser der Umfangswand dieser Vertiefung ist grösser als der Durchmesser des Hohlraumes 36. Der Durchmesser der Umfangswand der Vertiefung kann grösser sein als der Durchmesser der Andrückscheibe 43. Ein Zwischenstück 45 aus einem steifen Material ist jener Eckpartie des Grundkörpes 31 des Endstückes 12 zugeordnet, welche sich zwischen dem Innenraum 36 dieses Endstückes 12 und der Aussenfläche 44 der Verbindungsplatte 32 befindet. Dieses Zwischenstück 45 hat einen scheibenförmigen Abschnitt 98, welcher in der Vertiefung liegt, sowie einen rohrförmigen Abschnitt 99, welcher sich an die mittlere Partie des Flachabschnittes 98 anschliesst und welcher im Endstückinnenraum 36 liegt. Der platten- bzw. scheibenförmige Andrückkörper 43 am inneren Ende des Stössels 3 liegt auf der äusseren Stirnfläche der Einlage bzw. des Zwischenstückes 45 auf.

Mit dem Rohrstück 99 achsial ausgerichtet ist ein Dichtring 97 im Endstückinneren 36 und im Bereich der Verbindungsplatte 32 angeordnet. Durch diesen Dichtring 97 sowie durch den Scheibenabschnitt 98 des Zwischenstückes 45 geht der Stössel 3 hindurch. Die Innenfläche des Dichtringes 97 liegt am Stössel 3 und die Aussenfläche des Dichtringes 97 liegt an der Wand des Endstückinnenraumes 36 fluiddicht auf, sodass dieser Innenraum 36 durch den Dichtring 97 gegen den Hohlraum 37 im Innenteil 10 dieser Einrichtung abgedichtet ist.

Im Innenraum 36 befindet sich eine Distanzhülse 40, welche sich zwischen dem zuletzt genannten unteren Dichtring 97 und dem Dichtring 79 im oberen Bereich des Innenraumes 36 erstreckt. In der Wand dieser Hülse 40 ist eine Bohrung 71 für den Durchgang von Fluid ausgeführt. Die in der Richtung der Achse C liegenden Abmessungen des Innenraumes 36, der Dichtringe 79 und 97 sowie des Rohrstückes 99 und der Distanzhülse 40 sind derart gewählt, dass das Zwischenstück 45, auf welches im unbetätigten Zustand der Anpresskörper 43 drückt, über sein Rohrstückabschnitt 99 einen Druck auf den unteren Dichtring 97 ausübt. Dadurch wird der Spalt zwischen diesem Ring 97 und dem Stössel 3 einerseits und der Spalt zwischen dem Dichtring 97 und der Wand des Endstückinnenraumes 36 andererseits abgedichtet. Der Druck wird über die Distanzhülse 40 dann weiter auf den oberen Dichtring 79 übertragen, sodass auch der Raum zwischen dem Stössel 3 und der Wand des Endstückinnenraumes 36 im Bereich der Auflageplatte 33 abgedichtet ist.

Der Stössel 3 weist eine verjüngte Stelle 46 auf, welche eine mittlere Partie 47 sowie zwei Schrägpartien 48 aufweist. Der Durchmesser der Mittelpartie 47 ist kleiner als der Durchmesser des Grundkörpers 49 des Stössels 3. Je eine der Schrägpartien 48 liegt zwischen einem der Enden der Mittelpartie 47 und dem angrenzenden Abschnitt des Grundkörpers 49 des Stössels 3, sodass die jeweilige Schrägpartie 48 den Unterschied zwischen dem Durchmesser der Mittelpartie 47 und dem Durchmesser des Stösselgrundkörpers 49 überbrückt.

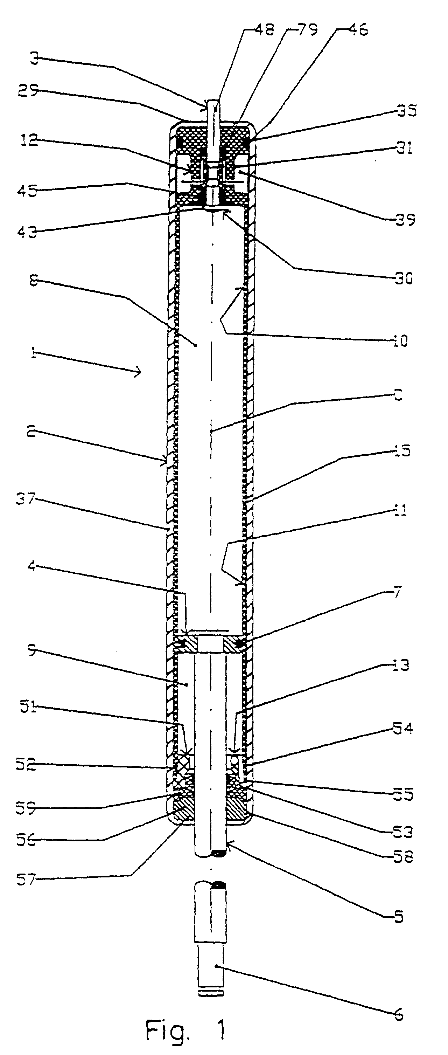

Wenn der Stössels 3 in seiner unbetätigten Stellung ist (Fig. 1 und 10), dann befindet sich die Verjüngung 46 am Stössel 3 in jenem Bereich des Endstückes 12, wo sich auch die Verbindungskanäle 41 und 42 in diesem befinden. Der Bereich dieser Kanäle 41 und 42 wird durch die Dichtringe 79 und 97 in der vorstehend genannten Weise abgedichtet. Bei Betätigung der Einrichtung wird der Stössel 3 so weit abwärts bewegt, bis die Verjüngung 46 in den Bereich des unteren Dichtrings 97 gelangt und diesen überbrückt. Zugleich wird der Andrückkörper 43 von der unteren Stirnfläche des Zwischenstückes 45 abgehoben. Das Fluid kann jetzt zwischen den genannten Kanälen 41 und 42 und dem Hohlraum 37 des Innenteiles 10 strömen.

Das zweite Endstück 13 dieser Einrichtung ist der gegenüberliegenden Endpartie 50 des Innenteiles 10 zugeordnet. Dieses Endstück 13 umfasst einen im wesentlichen hülsenförmigen Grundkörper 51, durch welchen die Kolbenstange 5 mit Spiel hindurchgeht. In jener Randpartie der Aussenseite dieses Grundkörpers 51, welche dem Hohlraum 37 im Innenteil 10 zugewandt ist, ist ein umlaufender Absatz 52 ausgeführt. Der Durchmesser dieses Absatzes 52 entspricht dem Innendurchmesser der Endpartie 50 des Innenteiles 10 so, dass diese Randpartie 52 des Grundkörpers 51 in die Endpartie 50 des Innenteiles 10 eingesetzt sein kann.

Im Grundkörper 51 des Endstückes 13 ist ein Verbindungskanal 53 ausgeführt. Dieser Verbindungskanal 53 umfasst einen ersten Abschnitt 54, welcher in der Wand des Absatzes 52 am Grundkörper 51 ausgeführt ist und welcher parallel oder beinahe parallel zur Längsachse C der Einrichtung verläuft. Eine der Endpartien dieses ersten Kanalabschnittes 54 mündet in den Hohlraum 37 des Innenteiles 10. Der Verbindungskanal 52 umfasst ferner einen zweiten Abschnitt 55, welcher einerends an den ersten Kanalabschnitt 54 angeschlossen ist. Das andere Ende dieses zweiten Kanalabschnittes 55 liegt im Umfangsbereich des Grundkörpers 51 dieses Endstückes 13 und dieses Kanalende ist der hier liegenden Mündung des Ueberströmkanals 15 gegenübergestellt, sodass das Fluid zwischen dem Innenraum 37 des Innenteiles 10 und dem Ueberströmkanal 15 fliessen kann.

Dieses Endstück 13 umfasst auch eine ringförmige Auflageplatte 56, durch welche die Kolbenstange 5 hindurchgeht. Auf dem äusseren Rand dieser Auflageplatte 56 liegt ein eingebördelter Rand 57 der hier liegenden Endpartie des Aussenteiles 1 auf.

Zwischen der Auflageplatte 56 und dem Grundkörper 51 dieses Endstückes 13 befindet sich eine ringförmige Dichtung 58 aus einem verformbaren Material, durch welche die Kolbenstange 5 ebenfalls hindurchgeht. Dieser Dichtring 58 ist zwischen dem Grundkörper 51 und der Auflageplatte 56 gequetscht und der Dichtring 58 wird dadurch nicht nur an die Kolbenstange 5 sondern auch an die Innenseite des Aussenteiles 1 angedrückt. Im dem Dichtring zugewandten Bereich des Grundkörpers 51 ist eine Erweiterung 59 der Oeffnung im Grundkörper 51 ausgeführt, welche sich von der dem Dichtring 58 zugewandten Oberfläche des Grundkörpers 51 in das Innere dieses hinein erstreckt. Das Material des Dichtringes 58 geht auch in das Innere dieser Erweiterung 59 hinein, sodass dieses über eine längere Strecke an der Kolbenstange 5 aufliegt als am Aussenteil 1.

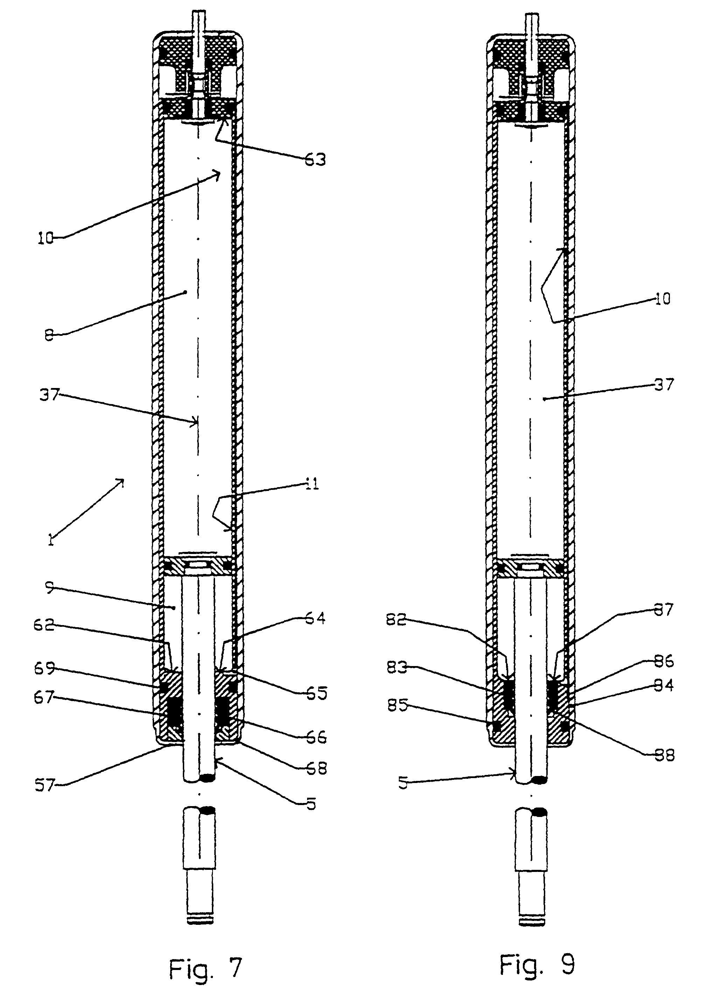

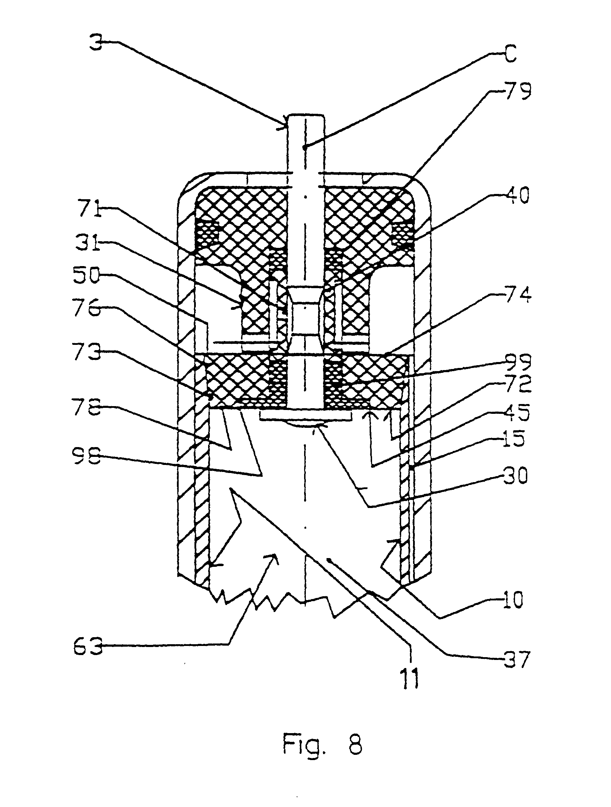

Fig. 7 und 8 zeigen eine weitere Ausführungsform der vorliegenden Einrichtung, bei welcher jenes Endstück 62, in welchem die Kolbenstange 5 verschiebbar gelagert ist, mit dem Grundkörper 11 des Innenteiles 10 einstückig ist. Der Grundkörper 64 dieses Endstückes 62 ist im wesentlichen hülsenförmig. Eine der Endpartien dieses Grundkörpers 64 ist mit dem Grundkörper 11 des Innenteiles 10 fest verbunden bzw. einstückig. In dieser Endpartie des Endstückes 64 ist ein Anschlusskanal 65 ausgeführt. Eine der Mündungen dieses Anschlusskanals 65 öffnet sich in den Hohlraum 37 des Grundkörpers 11 des Innenteiles 10. Die andere Mündung des Anschlusskanals 65 ist der hier liegenden Mündung des Ueberströmkanals 15 zugeordnet.

Im vom Innenteil 10 abgewandten Bereich des Grundkörpers 64 ist eine Erweiterung 66 der Oeffnung im Grundkörper 64 ausgeführt, welche eine zylinderförmige Wand aufweist und welche sich von der hier liegenden Oberfläche des Grundkörpers 64 in das Innere dieses Grundkörpers 64 hinein erstreckt. Im Inneren dieser Erweiterung 66 ist eine im wesentlichen hülsenförmige Dichtung 67 eingesetzt, welche auf dem Boden der Erweiterung 66 aufliegt. Die Innenfläche dieser Dichtung 67 ist mit umlaufenden Lippen versehen, welche auf der Kolbenstange 5 aufliegen. Die Länge dieser Dichtung 67 ist kleiner als die Tiefe der Erweiterung 66. Im restlichen und über der Dichtung 67 vorhandenen Raum der Erweiterung 66 liegt ein Druckring 68. Die Dicke bzw. Höhe dieses Druckrings 68 ist so gewählt, dass er im entspannten Zustand aus dem Grundkörper 64 ragt. Der eingebördelte Rand 57 des Aussenteiles 1 drückt auf die Partie des Druckringes 68, sodass die Dichtung 67 zwischen dem Druckring 68 und dem Boden der Erweiterung 66 zusammengepresst ist, wodurch er an die Kolbenstange 5 fest angedrückt wird. Zwischen der Aussenseite des Grundkörpers 64 und der Innenseite des Aussenteiles 1 befindet sich ein Dichtring 69.

Das der offenen Endpartie 50 des Innenteiles 10 zugeordnete Endstück 63 ist im wesentlichen so ausgebildet, wie dies vorstehend im Zusammenhang mit dem Endstück 12 beschrieben ist. Einzig die Verbindungsplatte 72 dieses Endstückes 63 ist anders ausgebildet. Diese Verbindungsplatte 72 (Fig. 8) hat eine frei stehende Umfangswand 73, welche im wesentlichen kreisförmig ist. Diese Wand 73 hat die Form des Mantels eines Konusses, wobei die Neigung dieser Umfangswand 73 so ist, dass jene Grundfläche 74 des Konusses 73, welche den grösseren Durchmesser hat, im Inneren des Endstückes 63 liegt. Die den kleineren Durchmesser aufweisende Grundfläche 78 des Konusses 73 liegt im Hohlraum 37 des Innenteiles 10.

Die Innenwand der offenen Endpartie 50 des Grundkörpers 11 des Innenteiles 10 weist eine ebenfalls konisch verlaufende Fläche 76 auf, welche sich gegen aussen hin öffnet und welche sich von der äusseren Stirnkante der offenen Endpartie 50 des Innenteiles 10 gegen den Hohlraum 37 in diesem Innenteil 10 hin erstreckt. Die Form und die Abmessungen dieser Konuswand 76 sind so gewählt, dass die konusförmige Umfangswand 73 der Verbindungsplatte 72 in die Konuswand 76 des Endstückes 63 fluiddicht hineinpasst.

Fig. 9 zeigt eine weitere Ausführungsmöglichkeit der Einrichtung gemäss Fig. 7. Bei dieser Einrichtung ist das erste und mit dem Innenteil 10 einstückige Endstück 82 etwas anders ausgeführt als das erste Endstück 62 gemäss Fig. 7. Im dem Innenteil 10 zugewandten Bereich des hülsenförmigen Grundkörpers 84 dieses Endstückes 82 ist eine Erweiterung 86 der Oeffnung im Grundkörper 84 ausgeführt, welche eine zylinderförmige Wand aufweist, wobei die Achse dieses Zylinders, gleich wie bei der Erweiterung 66, auf der Achse C der Einrichtung liegt. Die vorliegende Erweiterung 86 erstreckt sich von der im Hohlraum 37 des Innenteiles 10 liegenden Oberfläche des Grundkörpers 84 in das Innere dieses Grundkörpers 84 hinein.

Im Inneren der Erweiterung 86 ist eine Dichtung 87 eingesetzt. Diese Dichtung 87 weist einen Hauptteil 83 auf, welcher im wesentlichen die Form des Mantels eines Zylinders aufweist. Die Innenfläche dieses Hauptteiles 83 ist mit umlaufenden Lippen versehen, welche auf der Kolbenstange 5 aufliegen. Von jener Kante dieses Hauptteiles 83, welche im Inneren der Erweiterung 86 liegt, steht eine zusätzliche und schräg verlaufende Dichtlippe 85 ab, deren Wirkpartie an der Kolbenstange 5 ebenfalls aufliegt. Im Boden dieser Oeffnungserweiterung 86 ist eine umlaufende Rille 88 ausgeführt, welche sich im Bereich der Durchgangsöffnung im Endstück 82 befindet und welche sich gegen die Kolbenstange 5 hin öffnet. In dieser Rille 88 liegt die schräg verlaufende Dichtlippe 85.

Fig. 10 zeigt eine weitere Ausführungsmöglichkeit des Endstückes mit einer frei stehenden Verbindungsplatte 72, beispielsweise gemäss Fig. 8, bei welcher der Uebergang zwischen der Umfangswand 73 der Verbindungsplatte 72 und der Konuswand 76 des Innenteiles 10 besser abgedichtet ist. In der Umfangswand 73 der Verbindungsplatte 72 ist eine umlaufende Rille ausgeführt, in welcher ein Dichtring 75 eingesetzt ist. Der aus der Rille ragende Abschnitt dieses Dichtringes 75 liegt an der Konuswand 76 des Innenteiles 10 auf, was die erwähnte bessere Abdichtung des Ueberganges zwischen den Wänden 73 und 76 verursacht.

Fig. 11 zeigt noch eine weitere Möglichkeit, wie der genannte Uebergang zwischen den Wänden 73 und 76 besser abgedichtet sein kann. Zu diesem Zweck ist die genannte Konus- bzw. Schrägwand 76 am Innenteil 10 mit einem ringförmigen, von der Oberfläche dieser Schrägwand 76 abstehenden und umlaufenden Wulst 77 versehen, welcher sich gegen die Umfangswand 73 der Verbindungsplatte 72 hin erstreckt. Da sowohl die Verbindungsplatte 72 als auch der Innenteil 10 aus einem Kunststoff sind, wird der Wulst 77 am Innenteil 10 in die Umfangswand 73 der Verbindungsplatte 72 eingepresst, wenn die Endpartien 29 und 57 des Aussenteiles bzw. des Gehäuses 1 eingebördelt werden. Es versteht sich jedoch, dass der Wulst 77 an oder auch an der Umfangswand 73 der Verbindungsplatte 72 angeformt sein kann, dass mehrere Wülste 77 an der jeweiligen Wand 73 und/oder 76 ausgeführt sein können usw.

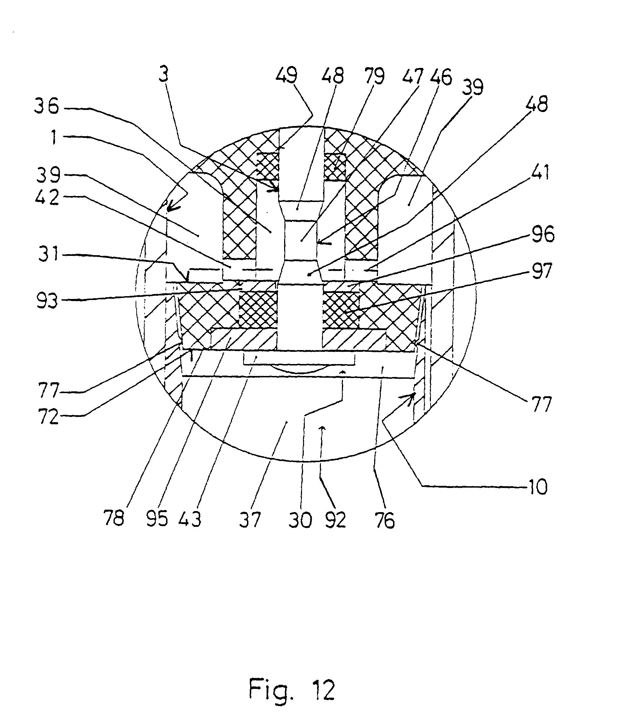

Fig. 12 zeigt in einem vertikalen Längsschnitt eine weitere Ausführungsform des Endstückes 92 mit der Ventilanordnung 30. Bei diesem Endstück 92 fehlt die vorstehend beschriebene Distanzhülse, sodass der Zusammenbau dieses Endstückes 92 einfacher durchgeführt werden kann. An den Zylinderraum 36 im Grundkörper 31 dieses Endstückes 92 schliesst sich im Bereich der Verbindungsplatte 72 ein weiterer Raum 93 an, dessen Seitenwand im wesentlichen ebenfalls zylinderförmig ist. Der Durchmesser dieses Raumes ist jedoch etwas grösser als der Durchmesser des Zylinderraumes 36. Dadurch entsteht am Uebergang zwischen diesen zwei Räumen 36 und 93 eine umlaufende Schulter 94, welche die Form eines flachen Ringes hat.

Im Erweiterungsraum 93 befindet sich ein flacher Stützring 96 aus einem steifen Material. Die äussere Randpartie der dem Grundkörper 31 zugewandten Oberfläche dieses Stützringes 96 liegt auf der Schulter 94 am Grundkörper 31 auf. Der gegenüberliegenden Oberfläche des Stützringes 96 ist eine ringförmige Dichtung 97 koaxial zugeordnet. Im Bereich des Absperrkörpers 43 des Ventils 30 ist der Erweiterungsraum 93 mit einer ringförmigen und ebenfalls koaxial angeordneten Einlage 95 abgeschlossen, welche ebenfalls aus einem steifen Material ist. Die Randpartie dieser Einlage 95 sitzt fest in der Verbindungsplatte 72. Bei der Betätigung der vorliegenden Einrichtung wird der Stössel 3 so weit nach unten bewegt, bis die Verjüngung 46 an diesem in den Bereich der Ringdichtung 97 gelangt. Dabei entsteht ein Spalt zwischen der Wandung 47 und 48 dieser Verjüngung 46 und der Innenfläche des Dichtringes 97, sodass das Fluid zwischen dem Innenraum 36 und dem Hohlraum 37 durch den genannten Spalt fliessen kann. Die Oeffnung in der Ringdichtung 97 hat einen Durchmesser, welcher so bemessen ist, dass beim geöffneten Ventil 30 ein Fluidfluss stattfindet, dass eine Spaltextrusion dieses O-Ringes jedoch verhindert wird.

## Patentansprüche

1. Einrichtung zur Verstellung der Länge einer Stütze, welche insbesondere an Stühlen, Tischen oder dgl. verwendbar ist, mit einem im wesentlichen rohrförmigen Aussenteil (1) und einem sich in diesem befindlichen Innenteil (10), welcher einen im wesentlichen rohrförmigen Grundkörper (11) aufweist, und mit einem Kolben (4), welcher im Innenteil verschiebbar ist, wobei den Endpartien des Grundkörpers (11) Endstücke (12,13) zugeordnet sind, die die Einrichtung nach außen hin abgrenzen **dadurch gekennzeichnet, dass** eines der Endstücke mit dem rohrförmigen Grundkörper (11) des Innenteiles (10) einstückig ist.

2. Einrichtung nach Patentanspruch 1, **dadurch gekennzeichnet, dass** die Aussenseite des rohrförmigen Grundkörpers (11) des Innenteiles (10) an der Innenseite des Aussenteiles (1) anliegt, dass ein Ueberströmkanal (15) zwischen dem Aussenteil und dem Innenteil ausgeführt ist, dass je eine der Mündungen dieses Kanals sich im Bereich eines der Endstücke befindet und dass der Kanal eine Drosselvorrichtung (20) aufweisen kann.

3. Einrichtung nach Patentanspruch 2, **dadurch gekennzeichnet, dass** der Ueberströmkanal (15) in der Aussenseite des Grundkörpers (11) des Innenteiles (10) als eine Rinne bzw. Nut ausgeführt ist.

4. Einrichtung nach Patentanspruch 1, **dadurch gekennzeichnet, dass** in jenem Endstück (12), welches mit dem Grundkörper (11) des Innenteiles (10) einstückig ist, eine Ventilanordnung (30) ausgeführt ist, welche das Ueberströmen eines Fluids zwischen jenen Räumen (8,9) steuert, von welchen je einer sich zu einer der Seiten des Kolbens (4) befindet.

5. Einrichtung nach Patentanspruch 1, **dadurch gekennzeichnet, dass** jenes Endstück (13), in welchem die Stange (5) des Kolbens (4) verschiebbar gelagert ist, mit dem Grundkörper (11) des Innenteiles (10) einstückig ist.

6. Einrichtung nach Patentanspruch 4, **dadurch gekennzeichnet, dass** das Endstück (12) einen rohrförmigen Grundkörper (31) aufweist, dessen Durchmesser kleiner ist als der Durchmesser des Grundkörpers (11) des Innenteiles (10), dass an eine der Endpartien des Grundkörpers (31) des Endstückes (12) sich eine Platte (32) anschliesst, welche die Form eines Ringes hat und deren Aussenrand mit einer der Endpartien des rohrförmigen Grundkörpers (11) des Innenteiles (10) fest verbunden ist, dass an das andere Ende des Grundkörpers (31) des Endstückes (12) sich eine Auflageplatte (33) anschliesst, welche im wesentlichen ebenfalls ringförmig ist, dass die im Bereich des Endstückes (12) liegende Endpartie des Ueberströmkanals (15) sich in einen Aussenraum (39) dieses Endstückes (12) öffnet, welcher seitens des Endstückes durch den vom Grundkörper (31) abstehenden Abschnitt der Verbindungsplatte (32) und der Auflageplatte (33) sowie durch die dazwischen liegende Oberfläche des Grundkörpers (31) begrenzt ist, und dass die Vetilanordnung (30) im Bereich des Grundkörpers (31) dieses Endstückes (12) ausgeführt ist.

7. Einrichtung nach Patentanspruch 6, **dadurch gekennzeichnet, dass** die Ventilanordnung (30) einen Stössel (3) aufweist, welcher im Innenraum (36) des Grundkörpers (31) des Endstückes (12) längsverschiebbar gelagert ist, dass ein Ventilkörper (43) an jene Endpartie des Stössels (3) angeschlossen ist, welche sich im Bereich der Verbindungsplatte (32) befindet, dass die dem Hohlraum (37) des Innenteiles (10) zugewandte Seite der Verbindungsplatte (32) als ein Sitz der Ventilanordnung ausgeführt ist und dass zumindest ein Kanal (41,42) vorgesehen ist, welcher den Innenraum (36) mit dem Aussenraum (39) des Endstückes (12) verbindet.

8. Einrichtung nach Patentanspruch 6, **dadurch gekennzeichnet, dass** das zweite Endstück (13) einen im wesentlichen hülsenförmigen Grundkörper (51) umfasst, dass eine der Endpartien (52) des hülsenförmigen Grundkörpers (51) in das offene Ende des Grundkörpers (11) des Innenteiles (10) eingesetzt ist, dass zwischen der Oberfläche dieses Endes des Innenteilgrundkörpers (11) und der in diesem eingesetzten Endpartie (52) des Endstückes (13) ein Anschlusskanal (53) ausgeführt ist, dass eine der Mündungen dieses Kanals (53) der hier liegenden Mündung des Ueberströmkanals (15) zugeordnet ist, dass die andere Mündung des Anschlusskanals (53) sich in den Hohlraum (37) des Grundkörpers (11) des Innenteiles (10) öffent und dass im Inneren dieses Endstückes (13) sich eine Dichtung (58) befindet, welche die Kolbenstange (5) umgibt.

9. Einrichtung nach Patentanspruch 5, **dadurch gekennzeichnet, dass** das mit dem Grundkörper (11) des Innenteiles (10) einstückige Endstück (62) einen im wesentlichen hülsenförmigen Grundkörper (64) umfasst, dass eine der Endpartien dieses Grundkörpers (64) mit dem Grundkörper (11) des Innenteiles (10) fest verbunden ist, dass im Bereich dieser Endpartie des Endstückes (64) ein Anschlusskanal (65) ausgeführt ist, dass eine der Mündungen dieses Anschlusskanals (65) der hier liegenden Mündung des Ueberströmkanals (15) zugeordnet ist, dass die andere Mündung des Anschlusskanals (65) sich in den Hohlraum (37) des Grundkörpers (11) des Innenteiles (10) öffent und dass im Inneren dieses Endstückes (64) sich eine Dichtung (67) befindet, welche die Kolbenstange (5) umgibt. (Fig. 7 u.ff.)

10. Einrichtung nach Patentanspruch 9, **dadurch gekennzeichnet, dass** das in das offene Ende des Innenteiles (11) eingesetzte Endstück (63) einen rohrförmigen Grundkörper (31) aufweist, dass mit einer der Endpartien dieses Grundkörpers (31) eine Platte (72) einstückig ist, welche die Form eines Ringes hat und dass die Randpartie dieser Verbindungsplatte (72) so geformt ist, dass sie in das offene Ende des Innenteiles (11) dichtend passt.

11. Einrichtung nach Patentanspruch 2, **dadurch gekennzeichnet, dass** die Drosselvorrichtung als eine verjüngte Stelle (20) des Ueberströmkanals (15) oder zumindest ein Kanal (41;42) im Grundkörper (31) des Endstückes (12) ausgeführt ist.

## Claims

1. Device for adjusting the length of a support which can be used, in particular, on chairs, tables or the like, having an essentially tubular outer part (1) and an inner part (10) which is located therein and has an essentially tubular basic body (11), and having a piston (4) which can be displaced in the inner part, the end portions of the basic body (11) being assigned end pieces (12, 13) which delimit the device in the outward direction, **characterized in that** one of the end pieces is integral with the tubular basic body (11) of the inner part (10).

2. Device according to Patent Claim 1, **characterized in that** the outside of the tubular basic body (11) of the inner part (10) butts against the inside of the outer part (1), **in that** an overflow channel (15) is provided between the outer part and the inner part, **in that** in each case one of the mouth openings of said channel is located in the region of one of the end pieces, and **in that** the channel may have a restricting means (20).

3. Device according to Patent Claim 2, **characterized in that** the overflow channel (15) is configured as a duct or groove in the outside of the basic body (11) of the inner part (10).

4. Device according to Patent Claim 1, **characterized in that** provided **in that** end piece (12) which is integral with the basic body (11) of the inner part (10) is a valve arrangement (30) which controls the overflow of a fluid between spaces (8, 9) of which in each case one is located on either side of the piston (4).

5. Device according to Patent Claim 1, **characterized in that** that end piece (13) in which the rod (5) of the piston (4) is mounted in a displaceable manner is integral with the basic body (11) of the inner part (10).

6. Device according to Patent Claim 4, **characterized in that** the end piece (12) has a tubular basic body (31), of which the diameter is smaller than the diameter of the basic body (11) of the inner part (10), **in that** one of the end portions of the basic body (31) of the end piece (12) is adjoined by a plate (32) which is in the form of a ring and of which the outer border is firmly connected to one of the end portions of the tubular basic body (11) of the inner part (10), **in that** the other end of the basic body (31) of the end piece (12) is adjoined by a bearing plate (33) which is likewise essentially annular, **in that** that end portion of the overflow channel (15) which is located in the region of the end piece (12) opens into an exterior space (39) of said end piece (12), the exterior space, on the end piece side, being bounded by the section of the connecting plate (32), and of the bearing plate (33), which projects from the basic body (31) and by the surface of the basic body (31) which is located therebetween, and **in that** the valve arrangement (30) is provided in the region of the basic body (31) of said end piece (12).

7. Device according to Patent Claim 6, **characterized in that** the valve arrangement (30) has a tappet (3), which is mounted in a longitudinally displaceable manner in the interior space (36) of the basic body (31) of the end piece (12), **in that** a valve body (43) is connected to that end portion of the tappet (3) which is located in the region of the connecting plate (32), **in that** that side of the connecting plate (32) which is directed towards the cavity (37) of the inner part (10) is configured as a seat of the valve arrangement, and **in that** there is provided at least one channel (41, 42) which connects the interior space (36) to the exterior space (39) of the end piece (12).

8. Device according to Patent Claim 6, **characterized in that** the second end piece (13) comprises an essentially sleeve-like basic body (51), **in that** one of the end portions (52) of the sleeve-like basic body (51) is inserted into the open end of the basic body (11) of the inner part (10), **in that** a connection channel (53) is provided between the surface of said end of the inner-part basic body (11) and the end portion (52), inserted into the latter, of the end piece (13), **in that** one of the mouth openings of said channel (53) is assigned to the mouth opening here of the overflow channel (15), **in that** the other mouth opening of the connection channel (53) opens into the cavity (37) of the basic body (11) of the inner part (10), and **in that** a seal (58) is located in the interior of said end piece (13) and encloses the piston rod (5).

9. Device according to Patent Claim 5, **characterized in that** the end piece (62), which is integral with the basic body (11) of the inner part (10), comprises an essentially sleeve-like basic body (64), **in that** one of the end portions of said basic body (64) is firmly connected to the basic body (11) of the inner part (10), **in that** a connection channel (65) is provided in the region of said end portion of the end piece (64), **in that** one of the mouth openings of said connection channel (65) is assigned to the mouth opening here of the overflow channel (15), **in that** the other mouth opening of the connection channel (65) opens into the cavity (37) of the basic body (11) of the inner part (10), and **in that** a seal (67) is located in the interior of said end piece (64) and encloses the piston rod (5) (Figure 7 ff.).

10. Device according to Patent Claim 9, **characterized in that** the end piece (63), which is inserted into the open end of the inner part (10), has a tubular basic body (31), **in that** a plate (72), which is in the form of a ring, is integral with one of the end portions of said basic body (31), and **in that** the border portion of said connecting plate (72) is formed such that it fits with sealing action into the open end of the inner part (10).

11. Device according to Patent Claim 2, **characterized in that** the restricting means is configured as a tapered location (20) of the overflow channel (15) or at least one channel (41; 42) in the basic body (31) of the end piece (12).

## Revendications

1. Dispositif pour le réglage de la longueur d'un support, qui peut être utilisé en particulier sur des chaises, des tables ou similaires, comprenant une partie extérieure (1) de forme essentiellement tubulaire, et une partie intérieure (10) se trouvant dans celle-ci, laquelle présente un corps de base (11) de forme essentiellement tubulaire et comprenant un piston (4), qui peut se déplacer dans la partie intérieure, des embouts (12, 13) étant associés aux parties d'extrémité du corps de base (11) et limitant le dispositif vers l'extérieur, **caractérisé en ce que** l'un des embouts est réalisé d'une pièce avec le corps de base (11) de forme tubulaire de la partie intérieure (10).

2. Dispositif selon la revendication 1, **caractérisé en ce que** le côté extérieur du corps de base (11) de forme tubulaire de la partie intérieure (10) s'applique contre le côté intérieur de la partie extérieure (1), **en ce qu'**un conduit de débordement (15) est réalisé entre la partie extérieure et la partie intérieure, **en ce qu'**à chaque fois une des embouchures de ce conduit se trouve dans la région d'un des embouts et **en ce que** le conduit peut présenter un dispositif d'étranglement (20).

3. Dispositif selon la revendication 2, **caractérisé en ce que** le conduit de débordement (15) est réalisé dans le côté extérieur du corps de base (11) de la partie intérieure (10) sous la forme d'une cannelure ou d'une rainure.

4. Dispositif selon la revendication 1, **caractérisé en ce qu'**un agencement de soupape (30) est réalisé dans chaque embout (12) qui est réalisé d'une pièce avec le corps de base (11) de la partie intérieure (10), cet agencement de soupape commandant le débordement d'un fluide entre chacun des espaces (8, 9), dont chacun se trouve respectivement vers un côté du piston (4).

5. Dispositif selon la revendication 1, **caractérisé en ce que** chaque embout (3) dans lequel est montée, de manière déplaçable, la tige (5) du piston (4), est réalisé d'une pièce avec le corps de base (11) de la partie intérieure (10).

6. Dispositif selon la revendication 4, **caractérisé en ce que** l'embout (12) présente un corps de base (31) de forme tubulaire, dont le diamètre est plus petit que le diamètre du corps de base (11) de la partie intérieure (10), **en ce qu'**une plaque (32) se raccorde à l'une des parties d'extrémité du corps de base (31) de l'embout (12), laquelle présente la forme d'un anneau et dont le bord extérieur est connecté fixement à l'une des parties d'extrémité du corps de base (11) de forme tubulaire de la partie intérieure (10), **en ce qu'**à l'autre extrémité du corps de base (31) de l'embout (12) se raccorde une plaque d'appui (33) qui est essentiellement également de forme annulaire, **en ce que** la partie d'extrémité du conduit de débordement (15) se trouvant dans la région de l'embout (12) s'ouvre dans un espace extérieur (39) de cet embout (12), lequel est limité du côté de l'embout par la portion saillant du corps de base (31) de la plaque de connexion (32) et de la plaque d'appui (33) ainsi que par la surface du corps de base (31) se trouvant entre elles, et **en ce que** l'agencement de soupape (30) est réalisé dans la région du corps de base (31) de cet embout (12).

7. Dispositif selon la revendication 6, **caractérisé en ce que** l'agencement de soupape (30) présente une tige-poussoir (3) qui est montée de manière déplaçable en longueur dans l'espace intérieur (36) du corps de base (31) de l'embout (12), **en ce qu'**un corps de soupape (43) est raccordé à chaque partie d'extrémité de la tige-poussoir (3) qui se trouve dans la région de la plaque de connexion (32), **en ce que** le côté de la plaque de connexion (32) tourné vers l'espace creux (37) de la partie intérieure (10) est réalisé en tant que siège d'un agencement de soupape, et **en ce qu'**il est prévu au moins un conduit (41, 42) qui relie l'espace intérieur (36) à l'espace extérieur (39) de l'embout (12).

8. Dispositif selon la revendication 6, **caractérisé en ce que** le deuxième embout (13) comprend un corps de base (51) essentiellement en. forme de manchon, **en ce qu'**une des parties d'extrémité (52) du corps de base (51) en forme de manchon est insérée dans l'extrémité ouverte du corps de base (11) de la partie intérieure (10), **en ce qu'**entre la surface de cette extrémité du corps de base (11) de la partie intérieure et la partie d'extrémité (52) de l'embout (13) insérée dans celui-ci est réalisé un conduit de raccordement (53), **en ce qu'**une des embouchures de ce conduit (53) est associée à l'embouchure du conduit de débordement (15) se trouvant là, **en ce que** l'autre embouchure du conduit de raccordement (53) s'ouvre dans l'espace creux (37) du corps de base (11) de la partie intérieure (10) et **en ce qu'**à l'intérieur de cet embout (13) se trouve un joint d'étanchéité (58), qui entoure la tige de piston (5).

9. Dispositif selon la revendication 5, **caractérisé en ce que** l'embout (62) réalisé d'une pièce avec le corps de base (11) de la partie intérieure (10) comprend un corps de base (64) essentiellement en forme de manchon, **en ce qu'**une des parties d'extrémité de ce corps de base (64) est connectée fixement au corps de base (11) de la partie intérieure (10), **en ce que** dans la région de cette partie d'extrémité de l'embout (64) est réalisé un conduit de raccordement (65), **en ce que** l'une des embouchures de ce conduit de raccordement (65) est associée à l'embouchure du conduit de débordement (15) se trouvant là, **en ce que** l'autre embouchure du conduit de raccordement (65) s'ouvre dans l'espace creux (37) du corps de base (11) de la partie intérieure (10) et **en ce qu'**à l'intérieur de cet embout (64) se trouve un joint d'étanchéité (67), qui entoure la tige de piston (5) (figures 7 et suivantes).

10. Dispositif selon la revendication 9, **caractérisé en ce que** l'embout (63) inséré dans l'extrémité ouverte de la partie intérieure (11) présente un corps de base (31) de forme tubulaire, **en ce qu'**une plaque (72) est réalisée d'une pièce avec l'une des parties d'extrémité de ce corps de base (31), laquelle a la forme d'un anneau et **en ce que** la partie de bord de cette plaque de connexion (72) est formée de telle sorte qu'elle s'adapte hermétiquement dans l'extrémité ouverte de la partie intérieure (11).

11. Dispositif selon la revendication 2, **caractérisé en ce que** le dispositif d'étranglement est réalisé sous la forme d'une partie rétrécie (20) du conduit de débordement (15) ou au moins sous la forme d'un conduit (41 ; 42) dans le corps de base (31) de l'embout (12).
